# EUROPEAN PATENT SPECIFICATION

(11) **EP 4 448 137 B1**
(45) Date of publication and mention of the grant of the patent: **04.02.2026**
(21) Application number: 22838669.4
(22) Date of filing: 13.12.2022
(51) Int. Cl.: B01D 29/33, B01D 29/52, B01D 29/86, B01J 8/10, B01J 8/00, B01D 29/96

(54) **FILTRATION DEVICE**
FILTRIERUNGSVORRICHTUNG
DISPOSITIF DE FILTRATION

(30) Priority: 17.12.2021 EP 21215715
(43) Date of publication of application: 23.10.2024
(73) Proprietor: INEOS Europe AG, 1180 Rolle, Vaud (CH)
(72) Inventor: VASHISTA, Lalit, Mumbai 400053 (IN); RAI, Sanjeev, Maharashtra 400607 (IN)
(74) Representative: Mathisen & Macara LLP
(86) International application number: PCT/EP2022/085555
(87) International publication number: WO 2023/110831

(56) References cited:
- DE-A1- 3 233 726
- US-A1- 2004 124 140

## Description

The present invention relates to a filtration device, and in particular a filtration device comprising baffles and filters which can be inserted and removed from a reactor to enable the filters to be replaced externally to the reactor, to a reactor comprising the filtration device and to a process for filtration using the filtration device.

Stirred tank reactors are known for a large number of applications. In some applications the reactor may contain a mixture of solids and liquid which it is desired to separate, and the reactor may be provided with filters, such as candle filters, through which the liquid is withdrawn from the reactor.

US7488760, for example, describes a process for separating liquid from slurry of solid catalyst particles suspended in a suspension liquid in a reactor. The reactor is fitted with filters ("primary filtration stage") by which liquid is separated from the larger catalyst particles. In this document some catalyst particles pass through the primary filters and are then removed in subsequent stages. In other known processes, essentially all particles may be removed from the liquid in the filters in the reactor. The process in US 7488760 is said to be widely applicable but mention is made in particular of hydrocarbon synthesis, such as Fischer-Tropsch synthesis.

Another stirred tank reactor with an internal filtering system is described in EP2707128B1, which in particular describes an ammoxidation reactor for cyclohexanone oxime production with an internal filtering system comprising a set of tubular candles filters arranged in two concentric circular crowns.

US 2004/124140 describes a draft tube reactor in which there are provided substantially vertically oriented filter media which are attached to the interior wall of the reactor. DE3233726A1 also describes a reactor which contains filter elements, including candle filters in one option.

Whilst such systems are widely known, it is also known that over time the filters can become blocked or otherwise degrade. This is the case even where a system of backflushing, such as in US 7488760, is provided. When this happens it is necessary to remove the filters and either clean or replace them.

Conventional filtering systems, such as the candle filter arrays in the above documents, are bolted to the reactor, either directly or to headers which are contained within the reactor. On commercial scale reactors it is typically necessary for the technician to enter the reactor to unbolt the filters. (DE 3233726 A1, for example, notes that the filters can be introduced individually through a manhole.) Since many of the processes in which the reactors are used comprise hazardous chemicals this is both a physical and chemically hazardous activity.

Further, most stirred bed reactors also comprise baffles located around the internal circumference of the reactor which provide a further physical challenge in accessing the filters to be removed and inserting the replacements/cleaned filters.

The object of the present invention is to provide a filtration device which can be easily and safely inserted into and removed from a stirred tank reactor, and in particular without it being necessary to physically enter into the reactor. This is achieved by providing both the filters and the baffles on a frame which can itself be inserted and removed, and which can be easily attached to the reactor.

Thus, in a first aspect the present invention provides a filtration device, said filtration device comprising:
a. a first part comprising a frame of a generally cylindrical external profile,
b. a connection means suitable to attach the filtration device inside a reactor,
c. two of more baffles protruding inwardly from the frame,
d. at least one set of filters located on the first part, each set of said filters being fluidly connected to a header pipe.

A particular feature of the present invention is that both the baffles and the filters are part of the filtration device, and in particularly located on a frame of the filtration device. It is also a feature of the present invention that the filtration device has a connection means suitable to attach the filtration device inside a reactor. Therefore, the filtration device according to this first aspect of the present invention is not a reactor, but a device which can be installed inside a reactor. The filtration device is separate to and separable from a reactor in which it may be used i.e. the entire filtration device can be placed in a reactor for use and removed from a reactor after it has been used.

In the present invention the first part of the filtration device is a frame of a generally cylindrical external profile. Generally the frame is designed to fit within a reactor which is itself cylindrical, at least in its main body. Thus the diameter of the frame is dependent on the reactor but should be less than the diameter of the reactor in which it is to be used. The outer diameter of the frame may be subject to provision of a suitable clearance inside the reactor, but typically would be at least 90%, such as at least 95% of the internal diameter of the reactor.

The frame may be constructed as a series of concentric and coplanar rings which are joined to each other by a plurality of support members to form the frame of generally cylindrical external profile. The support members are preferably orientated perpendicular to the planes of the rings. (In place inside the reactor the planes of the rings are generally horizontal and the support members are usually and preferably generally vertical.) Typically there may be 3 to 20 rings and 4 to 50 support members. The exact number, as well as the thickness of each ring and support member, isn't generally critical, but preferred frames will have sufficient rings and support members to give a rigid frame, whilst minimising the weight of the frame. It will be apparent, for example, that a larger number of smaller components can be used, or a smaller number of larger components to get suitable rigidity. Minimising the weight of the frame is advantageous for cost reasons (since less material required) but most importantly for ease of manipulation of the filtration device (installing and removing from a reactor). A preferred frame may have 3 to 8 rings and 4 to 20 support members. An example of a suitable frame structure is shown in the Figures which will be described below.

The frame, along with other parts of the filtration device, may be made of any suitable material or materials. Typically the frame is made of metal. Any joints may be bolted or welded. Typically the frame material will be selected to be compatible with the reaction to be performed. Suitable materials will be apparent to the person skilled in the art. Suitable materials include stainless steel, such as 316 stainless steel, for example. The frame may be made of the same material as the reactor in which it is to be used, but this is not essential.

The filtration device, once inserted in the reactor, is attached in place. To facilitate this the device comprises a connection means suitable to attach the filtration device inside the reactor. In preferred embodiments the connection means are such that they are accessible without entering the reactor (when the filtration device is inserted into the reactor). Thus, they are generally provided at or near (for example, within 20% of the total length of the filtration device and/or within 30cm from) the end of the filtration device which is at the open end of the reactor during insertion.

In one example, and which is a preferred embodiment, a flange may be provided at the end of the first part which will mate with a flange or flanges on the top of the reactor. Most preferably, the filtration device comprises a second part connected at one end of the first part, which second part comprises a flange with an annular cross-section which is concentric with the frame of the first part but with an outer diameter larger than the diameter of the frame. The flange may be 4 to 60 cm larger in outer diameter than the first part. For example, a flange with 10cm larger outer diameter gives an annular cross-section with 5cm annular width, which is sufficient for suitable gaskets and bolts

The frame is typically of quite a large size, with a diameter of at least 0.8m, and usually at least 1m. It may be at least 1m, such as at least 1.5m in length. The frame, the baffles, and in some embodiments also the filters, are generally made of metal. Thus, the filtration device is both large and heavy. Typically a hoist or similar device will be used to aid its insertion and removal from the reactor. In preferred embodiments one or more lifting points, such as lugs, will be provided on the device for this purpose.

In particular, in a second aspect, which is also a preferred embodiment of the first aspect, there is provided a filtration device, said filtration device comprising:
a. a first part comprising a frame of a generally cylindrical external profile,
b. a second part connected at one end of the first part, which second part comprises a flange with an annular cross-section which is concentric with the frame of the first part but with an outer diameter larger than the diameter of the frame,
c. optionally one of more lifting points, preferably located on the second part or on the first part but at the same end as the second part,
d. two of more baffles protruding inwardly from the frame,
e. at least one set of filters located on the first part, each set of said filters being fluidly connected to a header pipe.

In both the first and second aspects the filtration device comprises at least one set of filters located on the first part. Any suitable filters may be used. A preferred type of filtration device is a candle filter. Thus, the at least one set of filters preferably comprises a plurality of candle filters.

According to a preferred embodiment (of both the first and second aspects of the present invention) there is provided a set of filters which are located inside the frame and distributed around the internal circumference of the frame. For example, a set of at least 4, such as at least 8, and more preferably at least 12 filters may be distributed around the internal circumference of the frame. As used herein these will be referred to as a "first set" of filters. Up to 30 filters, such as up to 20 filters may be present in this first set.

Where the filters are candle filters then this first set of filters preferably comprises a plurality of candle filters orientated parallel to the axis of the frame.

In a further preferred embodiment, which may be present in addition to the first set of filters or independently, the filtration device comprises a set of filters protruding from the end of the first part which is remote from the second part. As used herein these will be referred to as a "second set" of filters. However, this terminology is only used for ease of reference and does not preclude that this is the only set of filters present.

This second set of filters may comprise at least 4, such as at least 8, and more preferably at least 12 filters distributed around the circumference at the end of the first part of the frame. Up to 30 filters, such as up to 20 filters may be present in this second set.

The filters in the second set are also preferably candle filters. The filters may "point" in any suitable direction, but in preferred embodiments are orientated to form a cone-like profile at the end of the filtration device. For example the set of filters protruding from the end of the first part which is remote from the second part may comprise a plurality of candle filters orientated towards a common focal point, said focal point being coincident with the axis of the frame.

Such an orientation allows these filters to reside in a conical or similar shaped bottom of a typical reactor. An example of a suitable orientation is shown in the Figures which will be described below.

On the filtration device of the present invention each filter which is present on the first part is connected to a header pipe. In the present invention the header pipe is a pipe which is connected to one or more filters and is configured to withdraw filtrate from the reactor through the filters. Typically multiple filters are connected to a common header pipe. In one example, each of the first set of filters may be connected to a single header pipe. However, it is also within the scope of the present invention that there may be two or more header pipes connected to one set of filters.

In use each header pipe can be connected to an outlet which the filtrate can be removed from the header pipe (and hence from the reactor). Typically each is connected to a fluid outlet on the reactor. For ease of installation the number of header pipes can be minimised to minimise the number of connections which need to be made to the filtration device when it is inserted into the reactor.

To facilitate the connecting to the fluid outlet the header pipe (or pipes) may also be provided with a suitable connection means. In preferred embodiments this comprises a further flange, hereinafter referred to as a "header pipe flange", which can connect to a suitable fluid outlet flange on the inside of the reactor. This connection means (flange or other) may be made accessible without entering the reactor by suitable configuration of the header pipe on the frame and the outlet to which it is connected. (For example, by running the header pipe or pipes to a position at or near the end of the filtration device which is at the open end of the reactor during insertion.) (And where , for example, "near" means within 20% of the total length of the filtration device and/or within 30cm from the end.)

The filtration device also comprises two of more baffles protruding inwardly from the frame. Typically there may be 2 to 12, such as 3 to 8 baffles. Preferred baffles extend inwardly and along the majority of the length of the frame, such as along the entire length of the frame (the length of the frame as used herein meaning the direction parallel to the axis of the generally cylindrical profile of the frame).

In use the filtration device is placed inside a reactor. This may be done using a hoist or similar device as already noted. As also already described the header pipe or pipes are then connected to suitable outlets for the filtrate which will be obtained in use. The reactor can then be closed, typically by placing a lid or other closing means over the top of the reactor, and sealing the reactor with the filtration device in place.

Thus, in a third aspect, the present invention also provides a reactor comprising a filtration device as described herein, and preferably wherein the reactor comprises:
(i) a main body with a generally cylindrical cross-section,
(ii) a top part by which the reactor is closed, and
(iii) one or more outlet pipes for removal of fluid from the closed reactor, wherein the first part of the filtration device sits within the main body of the reactor and the flange of the second part of the filtration device connects to a flange on the top of the main body of the reactor to fix the filtration device in position in the reactor, and wherein the header pipe flange or flanges of the filtration device are each connected to an outlet pipe.

The reactor may be any suitable reactor but is preferably a stirred tank reactor. The reactor may have any suitable volume, but typically reactors of the type envisioned for the present invention will have a capacity of 0.5 to 10 m³.

A particular advantage of the present invention is that the reactor itself need not have any internal baffles. Thus, in a preferred embodiment the main body has no separate baffles.

The reactor in this third aspect, and correspondingly the filtration device in the first and second aspects, may be used in any suitable process in which it is required to filter solids to remove a liquid phase.

As will be described below, the present invention is particularly applicable for the preparation of catalysts. The invention will be exemplified when used for the production of Ziegler-Natta polymerisation catalysts, but it will be apparent that it could be applied also for many other catalyst preparations where solids catalyst or catalyst precursors are required to be separated from a liquid medium.

The present invention is also applicable for reactions involving catalysts, such as described in US7488760B2 and EP2707128B1. US7488760B2, for example, notes that the process therein is applicable to process for producing liquid and, optionally, gaseous products from gaseous reactants, where the process comprises feeding of gaseous reactants into a slurry bed of solid catalyst particles suspended in a suspension liquid, allowing the gaseous reactants to react to form liquid, and optionally gaseous products, and then filtering to recover the liquid product. The Fischer-Tropsch reaction is exemplified in this document. A further typical process, as described in EP2707128B1, is the ammoximation reaction for cyclohexanone oxime production.

It will be apparent to the person skilled in the art that the present reactor and the filtration device thus can find wide utility.

In yet a further (fourth) aspect, there is also provided a process for filtration which comprises filtering a liquid using the filtration device or from a reactor according to any one of first to third aspects.

The present invention can be further illustrated by reference to the attached Figures, where:
Figure 1 shows the profile of the filtration device, although for clarity the filters and header pipes are not shown, and
Figure 2 shows a second view of the same filtration device but with the filters and header pipes included.
Figure 3 shows the same filtration device in a reactor.

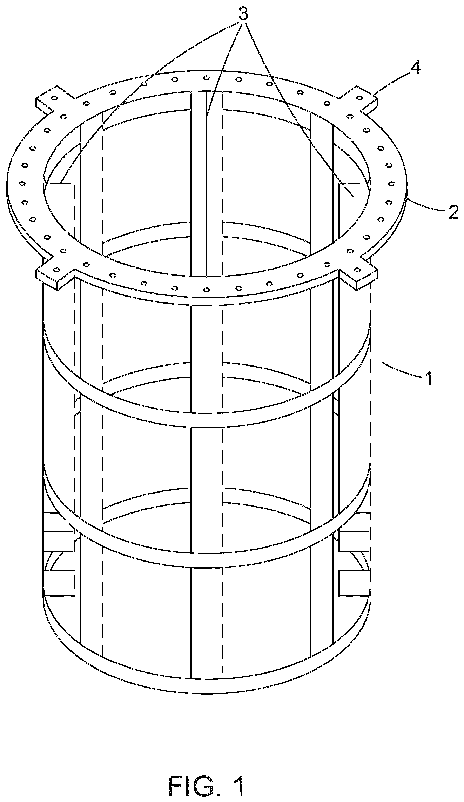

With reference to Figure 1, this shows the profile of filtration device. The device comprises a frame (1) of generally cylindrical external profile and a second part (2) which in this case is a flange with boltholes provides for connection to a flange on a reactor. The frame (1) in this example is formed of 4 concentric and coplanar rings which are joined to each other by 8 support members to form the frame of generally cylindrical external profile. Also shown in Figure 1 are baffles (3) protruding inwardly from the frame and lifting points (4) by which the frame can be connected to a hoist or similar for lifting. (For clarity the filters and header pipes are not shown.)

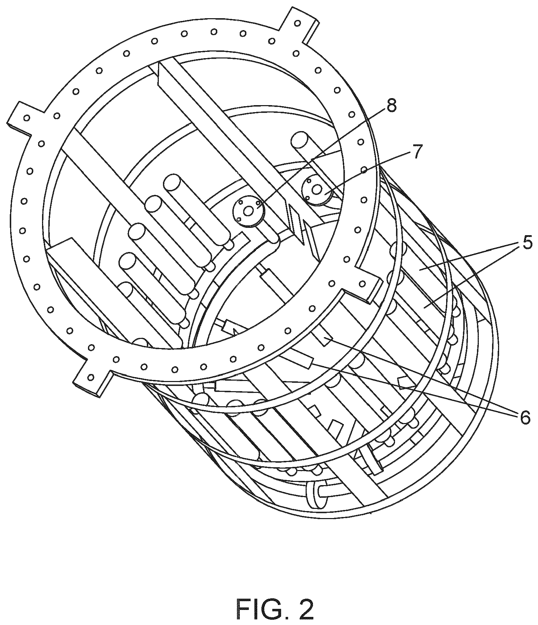

With reference to Figure 2, this shows a second view of the same filtration device but with filters and header pipes included. In particular, this shows a first set of candle filters (5) provided inside and around the internal circumference of the frame and a second set of candle filters (6) protruding from the end of the frame and orientated towards a common focal point. The first set of filters (5) is connected to a first header pipe which ends in a header pipe flange (7), whilst the second set of filters (6) is connected to a second header pipe which ends in a header pipe flange (8). (Although not present in this example, it will be apparent that a further set of filters could be provided within the frame, around the internal circumference and "above" the first set of filters.)

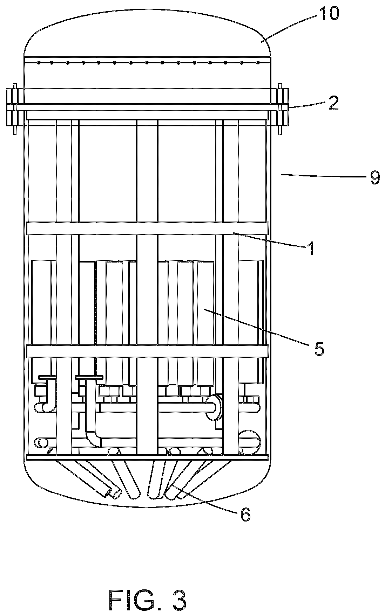

With reference to Figure 3, this shows the same filtration device in a reactor, which reactor comprises a main body (9), and a top section (10) by which the reactor is closed. The frame (1) sits inside the main body (9) of the reactor, with the filters (5, 6) as shown. Flange (2) of the filtration device fits between the main body (9) and top section (10) and is bolted in place when the reactor is assembled.

### Examples

### Reactor preparation

A frame as shown in Figures 1 and 2 was placed in a reactor as shown in Figure 3.

The reactor had a usable internal volume of 2m³. The frame comprised two sets of candle filters as shown in Figures 2 and 3, and in particular with 24 candle filters in the first set and 12 candle filters in the second set. The candle filters are stainless steel sintered powder filters with a pore size of 10-20 microns.

The frame was lowered into the top of the reactor using a hoist, and the header pipe flanges of the first and second sets of filters bolted to corresponding flanges inside the reactor. This was done without it being required for the operator to enter the reactor. The top of the reactor was closed by placing the flange of the filtration device between corresponding flanges on the main body of the reactor and on the lid of the reactor, and bolting these together. The reactor comprised a central stirrer shaft and paddles for stirring the contents.

The reactor was purged of air using nitrogen in readiness for the preparation of a Ziegler-Natta polymerisation catalyst.

### Catalyst preparation

The reactor is used for the preparation of a Ziegler-Natta catalyst supported on a magnesium ethoxide. Such catalysts are well known, and their preparation in general terms is described, for example, in US5556820, US 5965478, US7737069 or US7767772.

In the present case, a magnesium ethoxide suspended in heptane is loaded into the reactor.

The heptane is removed by filtration and replaced by toluene, and the slurry is stirred for 1 minute. The stirrer is turned off and the solid is allowed to settle for 1 minute, and then the toluene is removed by filtration and replaced by fresh toluene.

With stirring, titanium tetrachloride is added slowly, and the reactor contents are warmed to 57°C and mixed for an additional 30 minutes.

The temperature is then increased further, and when the temperature reached 100°C, di-n-butylphthalate (DNBP) is added as an internal donor and the reaction mixture stirred at 100°C for an additional 90 minutes.

After this time, the stirrer is stopped and the liquid is removed by filtration through the candle filters. After the liquid is removed, fresh toluene and titanium tetrachloride are added and the slurry stirred at 100°C for 30 minutes.

The stirrer is then stopped, the solids allowed to settle, and the liquid is removed through the candle filters. Further fresh toluene and a third portion of titanium tetrachloride is added and the slurry stirred for 30 minutes at 100°C.

The reactor is allowed to cool, the liquid is removed by filtration and heptane is added. The slurry in heptane is stirred at 57°C, before the solid is then allowed to settle, and the heptane is removed. Four more warm heptane washes are done in the same way.

The resulting solid is then recovered and dried. The resulting solid is a Ziegler-Natta polymerisation catalyst component comprising titanium supported on a magnesium ethoxide support and with di-n-butylphthalate internal donor, and is suitable for use in polymerisation of olefins, particularly of propylene, such as described in the aforementioned references.

### Reactor maintenance

The reactor is used to prepare repeated batches of catalyst in the manner described above. Over time (i.e. over a number of separate batches) the liquid throughout through the filters is noticed to reduce, indicative of partial blockage of the filters, and backflushing of the filters was not able to address this. The frame was therefore removed from the open reactor using a hoist, and after disconnecting the header pipe flanges of the first and second sets of filters from the corresponding flanges inside the reactor. This was done without it being required for any operator to enter the reactor.

Once the filtration device was removed from the reactor the candle filters were disconnected and replaced on the frame, ready for the filtration device to be re-used.

It can be noted that the replacement of the filters externally to the reactor is not only safer but much easier than when the filters are inside the reactor. Hence, even with the requirement to remove from the reactor and subsequently reinstall the filtration device, the reactor turn-around time can be improved using the filtration device of the present invention. Further, with the present invention it can also be possible to have a second filtration device which can be installed as soon as the first one is removed, allowing the turnaround time before further reactions can be performed to be reduced yet further still. This can be a significant further advantage of the claimed invention.

## Claims

1. A filtration device, said filtration device comprising:
a. a first part comprising a frame (1) of a generally cylindrical external profile,
b. a connection means suitable to attach the filtration device inside a reactor,
c. two of more baffles (3) protruding inwardly from the frame (1),
d. at least one set of filters (5, 6) located on the first part, each set of said filters (5, 6) being fluidly connected to a header pipe.

2. A filtration device according to claim 1 wherein the connection means comprises a flange provided at the end of the first part which can mate with a flange or flanges on the top of a reactor.

3. A filtration device according to claim 1 or claim 2 wherein the filtration device comprises a second part (2) connected at one end of the first part, which second part comprises the connecting means and which is a flange with an annular cross-section which is concentric with the frame (1) of the first part but with an outer diameter larger than the diameter of the frame (1).

4. A filtration device according to claim 3, wherein said filtration device comprises one of more lifting points (4), preferably located on the second part (2) or on the first part but at the same end as the second part.

5. A filtration device according to any one of claims 1 to 4 comprising a set of filters (5) provided inside and around the internal circumference of the frame (1).

6. A filtration device according to claim 5 wherein the set of filters (5) comprises a plurality of candle filters orientated parallel to the axis of the frame (1).

7. A filtration device according to claim 3 comprising a set of filters (6) protruding from the end of the first part which is remote from the second part (2).

8. A filtration device according to claim 7 wherein the set of filters (6) protruding from the end of the first part which is remote from the second part (2) comprises a plurality of candle filters orientated towards a common focal point, said focal point being coincident with the axis of the frame (1).

9. A reactor comprising a filtration device according to any one of claims 1 to 8.

10. A reactor according to claim 9, wherein the reactor comprises:
(i) a main body (9) with a generally cylindrical cross-section,
(ii) a top part (10) by which the reactor is closed, and
(iii) one or more outlet pipes for removal of fluid from the closed reactor, wherein the first part of the filtration device sits within the main body of the reactor, wherein the filtration device is attached to the reactor via the connection means/flange of the filtration device, and wherein the header pipe or pipes of the filtration device are each connected to an outlet pipe.

11. A reactor according to claim 10 wherein the filtration device comprises a second part (2) connected at one end of the first part, which second part comprises a flange with an annular cross-section which is concentric with the frame (1) of the first part but with an outer diameter larger than the diameter of the frame (1), and wherein the flange of the second part (2) of the filtration device connects to a flange on the top of the main body (9) of the reactor to fix the filtration device in position in the reactor.

12. A reactor according to any one of claims 9 to 11 wherein the reactor is a stirred tank reactor.

13. A reactor according to any one of claims 9 to 12 wherein the main body (9) has no separate baffles.

14. A process for filtration which comprises filtering a liquid using the filtration device according to any one of claims 1 to 8 or from a reactor according to any one of claims 9 to 13.

## Patentansprüche

1. Filtrierungsvorrichtung, wobei die Filtrierungsvorrichtung umfasst:
a. einen ersten Teil, der einen Rahmen (1) mit einem im Allgemeinen zylindrischen Außenprofil umfasst,
b. ein Verbindungsmittel, das geeignet ist, die Filtrierungsvorrichtung im Inneren eines Reaktors anzubringen,
c. zwei oder mehr Stromstörer (3), die vom Rahmen (1) nach innen ragen,
d. wenigstens einen Satz von Filtern (5, 6), der sich am ersten Teil befindet, wobei jeder Satz der Filter (5, 6) mit einem Sammelrohr fluidisch verbunden ist.

2. Filtrierungsvorrichtung nach Anspruch 1, wobei das Verbindungsmittel einen Flansch umfasst, der am Ende des ersten Teils bereitgestellt ist, der mit einem Flansch oder Flanschen an der Oberseite eines Reaktors zusammenpassen kann.

3. Filtrierungsvorrichtung nach Anspruch 1 oder Anspruch 2, wobei die Filtrierungsvorrichtung einen zweiten Teil (2) umfasst, der an einem Ende des ersten Teils verbunden ist, wobei der zweite Teil das Verbindungsmittel umfasst und wobei dieser ein Flansch mit einem ringförmigen Querschnitt ist, der konzentrisch zum Rahmen (1) des ersten Teils ist, aber einen Außendurchmesser aufweist, der größer ist als der Durchmesser des Rahmens (1).

4. Filtrierungsvorrichtung nach Anspruch 3, wobei die Filtrierungsvorrichtung einen oder mehrere Hebepunkte (4) umfasst, die sich vorzugsweise am zweiten Teil (2) oder am ersten Teil, jedoch am selben Ende wie der zweite Teil, befinden.

5. Filtrierungsvorrichtung nach einem der Ansprüche 1 bis 4, umfassend einen Satz von Filtern (5), der innerhalb und um den Innenumfang des Rahmens (1) herum bereitgestellt ist.

6. Filtrierungsvorrichtung nach Anspruch 5, wobei der Satz von Filtern (5) eine Vielzahl von Kerzenfiltern umfasst, die parallel zur Achse des Rahmens (1) ausgerichtet sind.

7. Filtrierungsvorrichtung nach Anspruch 3, umfassend einen Satz von Filtern (6), der von dem Ende des ersten Teils vorsteht, das vom zweiten Teil (2) entfernt ist.

8. Filtrierungsvorrichtung nach Anspruch 7, wobei der Satz von Filtern (6), der von dem Ende des ersten Teils vorsteht, das vom zweiten Teil (2) entfernt ist, eine Vielzahl von Kerzenfiltern umfasst, die auf einen gemeinsamen Brennpunkt ausgerichtet sind, wobei der Brennpunkt mit der Achse des Rahmens (1) zusammenfällt.

9. Reaktor, umfassend eine Filtrierungsvorrichtung nach einem der Ansprüche 1 bis 8.

10. Reaktor nach Anspruch 9, wobei der Reaktor umfasst:
(i) einen Hauptkörper (9) mit einem im Allgemeinen zylindrischen Querschnitt,
(ii) einen oberen Teil (10), durch den der Reaktor geschlossen wird, und
(iii) ein oder mehrere Auslassrohre zur Entnahme von Fluid aus dem geschlossenen Reaktor, wobei der erste Teil der Filtrierungsvorrichtung innerhalb des Hauptkörpers des Reaktors sitzt, wobei die Filtrierungsvorrichtung über das Verbindungsmittel/den Flansch der Filtrierungsvorrichtung am Reaktor angebracht ist, und wobei das Sammelrohr oder die Sammelrohre der Filtrierungsvorrichtung jeweils mit einem Auslassrohr verbunden sind.

11. Reaktor nach Anspruch 10, wobei die Filtrierungsvorrichtung einen zweiten Teil (2) umfasst, der an einem Ende des ersten Teils verbunden ist, wobei der zweite Teil einen Flansch mit einem ringförmigen Querschnitt umfasst, der konzentrisch zum Rahmen (1) des ersten Teils ist, aber einen Außendurchmesser aufweist, der größer ist als der Durchmesser des Rahmens (1), und wobei der Flansch des zweiten Teils (2) der Filtrierungsvorrichtung mit einem Flansch an der Oberseite des Hauptkörpers (9) des Reaktors verbunden ist, um die Filtrierungsvorrichtung in ihrer Position im Reaktor zu fixieren.

12. Reaktor nach einem der Ansprüche 9 bis 11, wobei der Reaktor ein Rührkesselreaktor ist.

13. Reaktor nach einem der Ansprüche 9 bis 12, wobei der Hauptkörper (9) keine separaten Stromstörer aufweist.

14. Verfahren zur Filtrierung, welches das Filtrieren einer Flüssigkeit unter Verwendung der Filtrierungsvorrichtung nach einem der Ansprüche 1 bis 8 oder aus einem Reaktor nach einem der Ansprüche 9 bis 13 umfasst.

## Revendications

1. Dispositif de filtration, ledit dispositif de filtration comprenant :
a. une première partie comprenant un cadre (1) d'un profil externe généralement cylindrique,
b. un moyen de raccordement approprié pour fixer le dispositif de filtration à l'intérieur d'un réacteur,
c. deux déflecteurs (3) parmi une pluralité de déflecteurs faisant saillie vers l'intérieur à partir du cadre (1),
d. au moins un ensemble de filtres (5, 6) situé sur la première partie, chaque ensemble desdits filtres (5, 6) étant raccordé de manière fluidique à un tuyau collecteur.

2. Dispositif de filtration selon la revendication 1, dans lequel le moyen de raccordement comprend une bride prévue à l'extrémité de la première partie qui peut s'accoupler avec une ou plusieurs brides situées sur le dessus d'un réacteur.

3. Dispositif de filtration selon la revendication 1 ou la revendication 2, dans lequel le dispositif de filtration comprend une seconde partie (2) raccordée à une extrémité de la première partie, laquelle seconde partie comprend le moyen de raccordement et qui est une bride à section transversale annulaire qui est concentrique avec le cadre (1) de la première partie mais avec un diamètre extérieur supérieur au diamètre du cadre (1).

4. Dispositif de filtration selon la revendication 3, dans lequel ledit dispositif de filtration comprend un ou plusieurs points de levage (4), situés de préférence sur la seconde partie (2) ou sur la première partie mais au niveau de la même extrémité que la seconde partie.

5. Dispositif de filtration selon l'une quelconque des revendications 1 à 4 comprenant un ensemble de filtres (5) disposés à l'intérieur et autour de la circonférence interne du cadre (1).

6. Dispositif de filtration selon la revendication 5 dans lequel l'ensemble de filtres (5) comprend une pluralité de filtres à bougies orientés parallèlement à l'axe du cadre (1).

7. Dispositif de filtration selon la revendication 3 comprenant un ensemble de filtres (6) faisant saillie à partir de l'extrémité de la première partie qui est éloignée de la seconde partie (2).

8. Dispositif de filtration selon la revendication 7 dans lequel l'ensemble de filtres (6) faisant saillie à partir de l'extrémité de la première partie qui est éloignée de la seconde partie (2) comprend une pluralité de filtres à bougies orientés vers un point focal commun, ledit point focal coïncidant avec l'axe du cadre (1).

9. Réacteur comprenant un dispositif de filtration selon l'une quelconque des revendications 1 à 8.

10. Réacteur selon la revendication 9, dans lequel le réacteur comprend :
(i) un corps principal (9) à section transversale généralement cylindrique,
(ii) une partie supérieure (10) au moyen de laquelle le réacteur est fermé, et
(iii) un ou plusieurs tuyaux de sortie pour l'évacuation du fluide à partir du réacteur fermé, dans lequel la première partie du dispositif de filtration se trouve à l'intérieur du corps principal du réacteur, dans lequel le dispositif de filtration est fixé au réacteur par le biais du moyen de raccordement/bride du dispositif de filtration, et dans lequel chacun du ou des tuyaux collecteurs du dispositif de filtration est raccordé à un tuyau de sortie.

11. Réacteur selon la revendication 10 dans lequel le dispositif de filtration comprend une seconde partie (2) raccordée à une extrémité de la première partie, laquelle seconde partie comprend une bride à section transversale annulaire qui est concentrique avec le cadre (1) de la première partie mais avec un diamètre extérieur supérieur au diamètre du cadre (1), et dans lequel la bride de la seconde partie (2) du dispositif de filtration est raccordée à une bride sur le dessus du corps principal (9) du réacteur pour fixer le dispositif de filtration en position dans le réacteur.

12. Réacteur selon l'une quelconque des revendications 9 à 11 dans lequel le réacteur est un réacteur à cuve agitée.

13. Réacteur selon l'une quelconque des revendications 9 à 12 dans lequel le corps principal (9) ne présente pas de déflecteur séparé.

14. Procédé de filtration qui comprend la filtration d'un liquide à l'aide du dispositif de filtration selon l'une quelconque des revendications 1 à 8 ou à partir d'un réacteur selon l'une quelconque des revendications 9 à 13.
